# EUROPEAN PATENT SPECIFICATION

(11) **EP 3 128 398 B1**
(45) Date of publication and mention of the grant of the patent: **12.07.2023**
(21) Application number: 15773264.5
(22) Date of filing: 01.04.2015
(51) Int. Cl.: B32B 27/08, B32B 27/22, G06F 3/041, C09J 129/14, C09K 3/10, G09F 9/00, C08K 5/00, C08K 5/103, B32B 27/30

(54) **INTERLAYER FILLING MATERIAL FOR TOUCH PANEL, AND LAMINATED BODY**
ZWISCHENSCHICHTFÜLLMATERIAL FÜR BERÜHRUNGSBILDSCHIRM UND LAMINIERTER KÖRPER
MATÉRIAU DE REMPLISSAGE INTER-COUCHES POUR UN PANNEAU TACTILE, ET CORPS STRATIFIÉ

(30) Priority: 03.04.2014 JP 2014077149
(43) Date of publication of application: 08.02.2017
(73) Proprietor: Sekisui Chemical Co., Ltd., Osaka-shi, Osaka 530-0047 (JP)
(72) Inventor: FUKATANI Juichi, Mishima-gun Osaka 618-0021 (JP)
(74) Representative: Cabinet Beau de Loménie
(86) International application number: PCT/JP2015/060356
(87) International publication number: WO 2015/152334

(56) References cited:
- EP-A1- 2 520 552
- WO-A1-2013/084836
- JP-A- S 649 421
- JP-A- 2002 140 014
- JP-A- 2002 169 017
- JP-A- 2011 074 308

## Description

### TECHNICAL FIELD

The present invention relates to a use of an interlayer filling material for a touch panel in and in particular for filling an interlayer space between a touch panel and another member, which is excellent in followability to a difference in level due to a decorative printing portion or wiring upon filling of the interlayer space (upon lamination) and deaeration properties of removing air bubbles trapped upon filling of the interlayer space (upon lamination) or air bubbles left around the difference in level, which is capable of suppressing scattering of fragments even when the personal digital assistant is broken. The present invention also relates to a laminated body.

### BACKGROUND ART

Touch panels are used in various fields. In a personal digital assistant such as a smartphone or a tablet, a touch panel is placed below a surface protection panel made of glass or the like. Below the touch panel, a polarizing film and a display are provided in the stated order.

In such a personal digital assistant, an interlayer space between the surface protection panel and the touch panel and an interlayer space between the touch panel and the polarizing film are filled with a filling material that has a smaller refractive index difference from these members in comparison with air. This enables improvement in transparency, luminance, contrast, and the like of a display screen and improvement in visibility.

From the standpoint of transparency, adhesiveness, applicability, and the like, an acrylic pressure-sensitive adhesive or an adhesive tape is often used as an interlayer filling material for a touch panel (e.g., Patent Literature 1) .

However, when an acrylic pressure-sensitive adhesive or an adhesive tape is used for lamination as a filling material, air bubbles may be trapped upon lamination to be left between a surface protection panel and a filling material, which lowers the visibility or durability. On the rear side of the surface protection panel, a printing portion is formed on the periphery for the purpose of providing masking and the like. Air bubbles are problematically left at boundary portions of a difference in level formed by such a printing portion or a difference in level due to wiring on a touch panel. Such air bubbles lower the visibility or durability. Since recent personal digital assistants are smaller, thinner, or lighter, a filling material is also desired to be thin. Conventional acrylic pressure-sensitive adhesives or adhesive tapes are difficult to achieve both thinness and properties of sufficiently following a difference in level to leave no air bubbles (followability to difference in level).

Moreover, when a personal digital assistant is broken by drop impact or the like, cohesive failure occurs in the case of conventional acrylic pressure-sensitive adhesives or adhesive tapes. As a result, scattering of fragments of glass or the like is hardly sufficiently suppressed. Though use of a shatterproof film can be considered, scattering is desired to be suppressed without using a shatterproof film in terms of the cost and production of a thinner personal digital assistant.

### CITATION LIST

### - Patent Literature

Patent Literature 1: JP 2011-74308 A

Each of JP S64 9421 A and EP 2 520 552 A1 shows an interlayer filling material like that involved in the use of claim 11.

### SUMMARY OF INVENTION

### - Technical Problem

The present invention aims to provide a use of an interlayer filling material for a touch panel in and in particular for filling an interlayer space between a touch panel and another member in production of a personal digital assistant and the like, which is excellent in followability to a difference in level due to a decorative printing portion or wiring upon filling of the interlayer space (upon lamination) and deaeration properties of removing air bubbles trapped upon filling of the interlayer space (upon lamination) or air bubbles left around the difference in level, which is capable of suppressing scattering of fragments even when the personal digital assistant is broken. The present invention also aims to provide a laminated body produced by using the interlayer filling material for a touch panel.

### - Solution to problem

The present invention is defined in the claims and specifically described in the following.

The present inventor found out that a plasticized polyvinyl acetal can be effectively used as a material for an interlayer filling material for a touch panel which is used to fill an interlayer space between a touch panel and another member, in the place of a conventionally used acrylic pressure-sensitive adhesive.

When an interlayer filling material for a touch panel contains a plasticized polyvinyl acetal and has a storage elastic modulus G' (20) at 20°C, a storage elastic modulus G' (85) at 85°C, and a temperature Tg at which tan δ reaches the maximum within a range of -20°C to 100°C each within a specific range, such an interlayer filling material for a touch panel has a higher storage elastic modulus and a higher loss elastic modulus at ambient temperatures (around 20°C) compared to acrylic pressure-sensitive adhesives. Moreover, such an interlayer filling material for a touch panel has no cohesive failure even when the personal digital assistant is broken, thereby suppressing scattering of fragments of glass or the like. In addition, since the storage elastic modulus and the loss elastic modulus of the interlayer filling material for a touch panel are significantly lowered by heating (around 85°C) upon filling of an interlayer space (upon lamination), the interlayer filling material can sufficiently follow a difference in level due to a decorative printing portion or wiring to remove air bubbles remaining at the boundary of the difference in level even when the interlayer filling material is a thin material.

The interlayer filling material for a touch panel is used according to the present invention in and in particular for filling an interlayer space between a touch panel and a different member, which is according to preferred alternatives of claim 10 a surface protection panel (e.g., glass sheet, polycarbonate sheet, acrylic sheet), or a polarizing film. In other words, the interlayer filling material for a touch panel is preferably used for filling an interlayer space between a surface protection panel and a touch panel and/or an interlayer space between a touch panel and a polarizing film.

The interlayer filling material for a touch panel contains a plasticized polyvinyl acetal. The plasticized polyvinyl acetal as used herein refers to a resin containing a polyvinyl acetal and a plasticizer.

The polyvinyl acetal can be prepared, for example, by saponification of polyvinyl acetate to prepare polyvinyl alcohol, followed by acetalization of the polyvinyl alcohol with an aldehyde in the presence of a catalyst. The saponification degree of the polyvinyl alcohol is not particularly limited, and is commonly within a range of 70 to 99.9 mol%, preferably 70 to 99.8 mol%, more preferably 80 to 99.8 mol%.

The average polymerization degree of the polyvinyl alcohol is not particularly limited. For better scattering prevention properties, the molecular weight of the polyvinyl acetal is preferably large, and therefore, polyvinyl alcohol with a higher average polymerization degree is preferably used. The lower limit of the average polymerization degree of the polyvinyl alcohol is preferably 200, and the upper limit thereof is preferably 4000. When the average polymerization degree is less than 200, the plasticized polyvinyl acetal may have lower mechanical strength, failing to sufficiently suppress scattering of fragments upon breakage of the personal digital assistant. When the average polymerization degree is more than 4000, the polyvinyl alcohol may be hardly acetalized because the viscosity of a solution becomes abnormally high upon acetalization. In addition, formation of an interlayer filling material for a touch panel may be difficult. The lower limit of the average polymerization degree is more preferably 600, and the upper limit thereof is more preferably 3800. The lower limit of the average polymerization degree is still more preferably 800, and the upper limit thereof is still more preferably 3600.

Upon acetalization of the polyvinyl alcohol with an aldehyde in the presence of a catalyst, a solution containing the polyvinyl alcohol may be used. Examples of a solvent used for the solution containing the polyvinyl alcohol include water.

The aldehyde is not particularly limited. Commonly, a C1-C10 aldehyde is preferably used.

The C1-C10 aldehyde is not particularly limited, and may be a linear or branched aldehyde. Examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. Among these, preferred are n-butyraldehyde, n-hexylaldehyde, and n-valeraldehyde, and more preferred is n-butyraldehyde. These aldehydes may be used alone or in combination of two or more thereof.

Specifically, the polyvinyl acetal is preferably polyvinyl butyral (when the aldehyde is n-butyraldehyde, the polyvinyl acetal is referred to as polyvinyl butyral) . Use of the polyvinyl butyral enables appropriate expression of adhesiveness of the interlayer filling material for a touch panel to glass and improvement in light resistance, weather resistance, and the like. If necessary, two or more kinds of polyvinyl acetals may be used in combination.

For excellent followability to a difference in level and deaeration properties, the polyvinyl acetal preferably contains few intermolecular crosslinks. The polyvinyl acetal containing fewer intermolecular crosslinks can provide an interlayer filling material for a touch panel with better followability to a difference in level, compared to those having the same molecular weight, the same amount of acetyl groups, and the same acetalization degree of the polyvinyl acetal. In addition, in a case where the molecular weight of the polyvinyl acetal is larger, better scattering prevention properties can be achieved.

In an exemplary method for obtaining a polyvinyl acetal having few intermolecular crosslinks, addition of the aldehyde is preferably controlled to avoid excessive addition before or during the acetalization with the aldehyde, thereby preventing crosslinking of adjacent main chains of polyvinyl alcohol. When the amount of the aldehyde added exceeds the amount required for acetalization, the crosslinking degree becomes higher.

The lower limit of the hydroxy group content (amount of hydroxy groups) of the polyvinyl acetal is preferably 16 mol%, and the upper limit thereof is preferably 45 mol%. When the amount of hydroxy groups is 16 mol% or higher, the interlayer filling material for a touch panel has higher adhesiveness to glass. When the amount of hydroxy groups is 45 mol% or lower, the polyvinyl acetal has higher flexibility so that its handleability is improved. In addition, the polyvinyl acetal and the plasticizer have higher compatibility so that the interlayer filling material for a touch panel has better followability to a difference in level. The lower limit of the amount of hydroxy groups is more preferably 18 mol%, still more preferably 20 mol%, particularly preferably 22 mol%, and the upper limit thereof is more preferably 40 mol%, still more preferably 38 mol%, furthermore preferably 36 mol%, particularly preferably 35 mol%.

The amount of hydroxy groups of a polyvinyl acetal refers to a value in percentage of the mol fraction (mol%) obtained by dividing the amount of ethylene groups to which hydroxy groups are bonded by the total amount of ethylene groups of the main chain. The amount of ethylene groups to which hydroxy groups are bonded can be determined by the method in conformity with JIS K6728 "Testing methods for Polyvinyl butyral".

The lower limit of the acetylation degree (amount of acetyl groups) of the polyvinyl acetal is preferably 0.1 mol%, and the upper limit thereof is preferably 30 mol%. When the amount of acetyl groups is 0.1 mol% or higher, the polyvinyl acetal and the plasticizer have higher compatibility so that the interlayer filling material for a touch panel has better followability to a difference in level. When the amount of acetyl groups is 30 mol% or less, the polyvinyl acetal has better moisture resistance. When the amount of acetyl groups is more than 30 mol%, the reaction efficiency in production of the polyvinyl acetal may be lowered. The lower limit of the amount of acetyl groups is more preferably 0.2 mol%, still more preferably 0.3 mol%, and the upper limit thereof is more preferably 24 mol%, still more preferably 20 mol%, furthermore preferably 19.5 mol%, particularly preferably 15 mol%.

The amount of acetyl groups is a value in percentage of the mol fraction (mol%) obtained by subtracting the amount of ethylene groups to which acetal groups are bonded and the amount of ethylene groups to which hydroxy groups are bonded from the total amount of ethylene groups of the main chain and then dividing the resulting value by the total amount of ethylene groups of the main chain. The amount of ethylene groups to which acetal groups are bonded can be measured in conformity with JIS K6728 "Testing methods for polyvinyl butyral".

The amount of acetyl groups of the polyvinyl acetal is adjusted within the above range, for example, by adjusting the saponification degree of the polyvinyl alcohol. Specifically, the amount of acetyl groups of the polyvinyl acetal depends on the saponification degree of the polyvinyl alcohol. When the polyvinyl alcohol used has a lower saponification degree, the amount of acetyl groups in the polyvinyl acetal is larger. When the polyvinyl alcohol used has a higher saponification degree, the amount of acetyl groups in the polyvinyl acetal is smaller.

The lower limit of the acetalization degree of the polyvinyl acetal is preferably 50 mol%, and the upper limit thereof is preferably 85 mol%. When the acetalization degree is 50 mol% or higher, the polyvinyl acetal and the plasticizer have higher compatibility. When the acetalization degree is 85 mol% or lower, the reaction time required for production of the polyvinyl acetal can be shortened. The lower limit of the acetalization degree is more preferably 54 mol%, still more preferably 58 mol%, particularly preferably 60 mol%. The upper limit of the acetalization degree is more preferably 82 mol%, still more preferably 79 mol%, particularly preferably 77 mol%.

The acetalization degree of a polyvinyl acetal is a value in percentage of the mole fraction (mol%) obtained by dividing the amount of ethylene groups to which acetal groups are bonded by the total amount of ethylene groups of the main chain. The acetalization degree can be calculated by measuring the amount of acetyl groups and the amount of vinyl alcohol (hydroxy group content) by a method in conformity with JIS K6728 "Testing methods for polyvinyl butyral", calculating the mole fractions based on the measurement result, and subtracting the amount of acetyl groups and the amount of vinyl alcohol from 100 mol%.

The acetalization degree of the polyvinyl acetal can be adjusted, for example, by adjusting the amount of the aldehyde added. When the amount of the aldehyde added is reduced, the acetalization degree of the polyvinyl acetal becomes lower. When the amount of the aldehyde added is increased, the acetalization degree of the polyvinyl acetal becomes higher.

The plasticizer is not particularly limited, and a conventionally known plasticizer can be used. A single plasticizer may be used, or two or more plasticizers may be used in combination. Examples of the plasticizer include organic acid ester plasticizers such as monobasic organic acid esters and polybasic organic acid esters, and phosphoric acid plasticizers such as organophosphate plasticizers and organophosphite plasticizers. In particular, preferred are organic acid ester plasticizers.

The plasticizer is preferably a liquid plasticizer.

The monobasic organic acid esters are not particularly limited, and examples thereof include glycol esters obtained by a reaction between a monobasic organic acid (e.g., butyric acid, isobutyric acid, caproic acid, 2-ethylbutyric acid, heptylic acid, n-octylic acid, 2-ethylhexylic acid, pelargonic acid (n-nonylic acid), decanoic acid) and a glycol (e.g., triethylene glycol, tetraethylene glycol, tripropylene glycol).

The polybasic organic acid esters are not particularly limited, and examples thereof include ester compounds obtained by a reaction between a polybasic organic acid (e.g., adipic acid, sebacic acid, azelaic acid) and a C4-C8 linear or branched alcohol.

The organic acid ester plasticizer is preferably a diester plasticizer represented by the formula (1) . Use of the diester plasticizer facilitates formation of the interlayer filling material for a touch panel.

R¹-CO-(-R³-O-)ₚ-CO-R² (1)

In the formula (1), R¹ and R² each represent a C5-C10 (preferably C6-C10) organic group, R³ represents an ethylene, isopropylene, or n-propylene group, and p represents an integer of 3 to 10.

Specific examples of the organic acid ester plasticizer include triethylene glycol-di-2-ethyl butyrate, triethylene glycol-di-2-ethylhexanoate, triethylene glycol dicaprylate, triethylene glycol-di-n-octanoate, triethylene glycol-di-n-heptanoate, tetraethylene glycol-di-n-heptanoate, tetraethylene glycol-di-2-ethylhexanoate, dibutyl sebacate, dioctyl azelate, dibutylcarbitol adipate, ethylene glycol-di-2-ethyl butyrate, 1,3-propylene glycol-di-2-ethyl butyrate, 1, 4-butylene glycol-di-2-ethyl butyrate, diethylene glycol-di-2-ethyl butyrate, diethylene glycol-di-2-ethylhexanoate, dipropylene glycol-di-2-ethyl butyrate, triethylene glycol-di-2-ethylpentanoate, tetraethylene glycol-di-2-ethyl butyrate, diethylene glycol dicaprylate, dihexyl adipate, dioctyl adipate, hexyl cyclohexyl adipate, diisononyl adipate, heptylnonyl adipate, oil-modified sebacic alkyds, mixtures of a phosphate ester and an adipic acid ester, and mixed-type adipic acid esters prepared from a C4-C9 alkyl alcohol and a C4-C9 cyclic alcohol.

The organophosphate plasticizers are not particularly limited, and examples thereof include tributoxyethyl phosphate, isodecylphenyl phosphate, and triisopropyl phosphate.

Among the plasticizers, preferred is at least one selected from the group consisting of dihexyl adipate (DHA), triethylene glycol-di-2-ethylhexanoate (3GO), tetraethylene glycol-di-2-ethylhexanoate (4GO), triethylene glycol-di-2-ethyl butyrate (3GH), tetraethylene glycol-di-2-ethyl butyrate (4GH), tetraethylene glycol-di-n-heptanoate (4G7) and triethylene glycol-di-n-heptanoate (3G7) . More preferred are triethylene glycol-di-2-ethyl butyrate, triethylene glycol-di-n-heptanoate (3G7), and triethylene glycol-di-2-ethylhexanoate (3GO), and still more preferred is triethylene glycol-di-2-ethylhexanoate.

The amount of the plasticizer based on the amount of the polyvinyl acetal is not particularly limited. The lower limit thereof is preferably 5 parts by weight and the upper limit thereof is preferably 75 parts by weight based on 100 parts by weight of the polyvinyl acetal. The amount within the above range facilitates compatible achievement of sufficient suppression of scattering of fragments upon breakage of the personal digital assistant and suppression of leaving air bubbles at a difference in level upon filling of an interlayer space (upon lamination).

When the amount is less than 5 parts by weight, formability of the interlayer filling material for a touch panel may be lowered. If the amount is more than 75 parts by weight, the interlayer filling material for a touch panel may have lower transparency or the plasticizer may bleed out. The lower limit of the amount of the plasticizer is more preferably 10 parts by weight, still more preferably 15 parts by weight, particularly preferably 20 parts by weight, and the upper limit thereof is more preferably 65 parts by weight, still more preferably 55 parts by weight, particularly preferably 45 parts by weight.

Since the polyvinyl acetal generates a cohesive force, the amount of the plasticizer is preferably small. Specifically, the compatibility between the polyvinyl acetal and the plasticizer is preferably increased to lower the amount of the plasticizer. This enables improvement in scattering prevention properties.

The compatibility between the polyvinyl acetal and the plasticizer is preferably increased, for example, by increasing the acetalization degree of the polyvinyl acetal or increasing the amount of acetyl groups of the polyvinyl acetal. Alternatively, the compatibility is preferably increased by reducing blocking properties of hydroxy groups of the polyvinyl acetal. Blocking of hydroxy groups is preferably suppressed by lowering the maturing temperature.

The amount of the plasticized polyvinyl acetal in the interlayer filling material for a touch panel is preferably 50% by weight or more. When the amount is less than 50% by weight, scattering of fragments may not be sufficiently suppressed upon breakage of the personal digital assistant or air bubbles may be left at a difference in level upon filling of an interlayer space (upon lamination) . The lower limit of the amount is more preferably 60% by weight, still more preferably 70% by weight, furthermore preferably 80% by weight, particularly preferably 90% by weight.

The upper limit of the amount of the plasticized polyvinyl acetal is not particularly limited, and may be 100% by weight.

The interlayer filling material for a touch panel may contain, if needed, known additives such as adhesion modifiers, tackifier resins, plasticizers, emulsifiers, softeners, fine particles, filler agents, pigments, dyes, silane coupling agents, antioxidants, surfactants, and wax to the extent that would not lower the transparency.

The interlayer filling material for a touch panel used in the present invention has a storage elastic modulus G' (20) at 20°C of 1 × 10⁷ Pa or higher, a storage elastic modulus G' (85) at 85°C of 1 × 10⁶ Pa or lower, and a temperature Tg at which tan δ reaches the maximum, within a range of -20°C to 100°C, of 5°C to 85°C.

Such an interlayer filling material for a touch panel has a higher storage elastic modulus and a higher loss elastic modulus at ambient temperatures (around 20°C) than acrylic pressure-sensitive adhesives, and therefore has favorable handleability and punching processability. Moreover, such an interlayer filling material for a touch panel has no cohesive failure even when the personal digital assistant is broken, thereby suppressing scattering of fragments of glass or the like. Since the storage elastic modulus and the loss elastic modulus are significantly lowered by heating (around 85°C) upon filling of an interlayer space (upon lamination), the interlayer filling material can sufficiently follow a difference in level due to a decorative printing portion or wiring to remove air bubbles remaining at the boundary of the difference in level even when the interlayer filling material is a thin material.

Having such elastic modulus properties, the interlayer filling material for a touch panel placed between layers and heated to around 85°C can easily fill an interlayer space upon filling of an interlayer space (upon lamination) and also is excellent in handleability. Pressurization upon heating further facilitates filling of an interlayer space.

When the storage elastic modulus G' (20) at 20°C is less than 2 × 10⁵ Pa, the elastic modulus at ambient temperatures may be lowered and scattering of fragments cannot be sufficiently suppressed upon breakage of the personal digital assistant. The storage elastic modulus G' (20) at 20°C is 1 × 10⁷ Pa or higher, particularly preferably 3 × 10⁷ Pa or higher.

The upper limit of the storage elastic modulus G' (20) at 20°C is not particularly limited, and is preferably 1 × 10¹⁰ Pa. When the storage elastic modulus G' (20) at 20°C is higher than 1 × 10¹⁰ Pa, the interlayer filling material for a touch panel may be too rigid, which possibly leads to lower adhesiveness or handleability. The upper limit of the storage elastic modulus G' (20) at 20°C is more preferably 1 × 10⁹ Pa.

When the storage elastic modulus G' (85) at 85°C is higher than 1 × 10⁶ Pa, the interlayer filling material for a touch panel may not follow deforming stress even with heating upon filling of an interlayer space (upon lamination) . As a result, air bubbles are likely to remain at a difference in level between layers. The storage elastic modulus G' (85) at 85°C is more preferably 9 × 10⁵ Pa or lower, still more preferably 8 × 10⁵ Pa or lower, furthermore preferably 7 × 10⁵ Pa or lower, particularly preferably 6 × 10⁵ Pa or lower.

The lower limit of the storage elastic modulus G' (85) at 85°C is preferably 4 × 10³ Pa. When the storage elastic modulus G' (85) at 85°C is less than 4 × 10³ Pa, the interlayer filling material for a touch panel may not maintain proper heat-resistant mechanical strength. The lower limit of the storage elastic modulus G' (85) at 85°C is more preferably 1 × 10⁴ Pa, still more preferably 5 × 10⁴ Pa, furthermore preferably 8 × 10⁴ Pa, particularly preferably 1.5 × 10⁵ Pa.

A ratio G' (20)/G' (85) obtained by dividing the storage elastic modulus G' (20) at 20°C by the storage elastic modulus G' (85) at 85°C is 10 or higher. The G' (20) /G' (85) within the above range facilitates compatible achievement of sufficient suppression of scattering of fragments upon breakage of the personal digital assistant and suppression of leaving air bubbles at a difference in level upon filling of an interlayer space (upon lamination) . The lower limit of the G' (20) /G' (85) is more preferably 20, still more preferably 50, furthermore preferably 100, particularly preferably 200.

The upper limit of the G' (20)/G' (85) is not particularly limited, and is preferably 2000. When the G' (20)/G' (85) is higher than 2000, the interlayer filling material for a touch panel may be too rigid, which possibly leads to lower adhesiveness or handleability.

A ratio G' (20)/G"(85) obtained by dividing the storage elastic modulus G' (20) at 20°C by the loss elastic modulus G"(85) at 85°C is preferably 15 or higher. The G' (20)/G"(85) within the above range facilitates compatible achievement of sufficient suppression of scattering of fragments upon breakage of the personal digital assistant and suppression of leaving air bubbles at a difference in level upon filling of an interlayer (upon lamination). The lower limit of the G' (20)/G"(85) is more preferably 50, still more preferably 100, furthermore preferably 150, particularly preferably 200.

The upper limit of the G' (20)/G"(85) is not particularly limited, and is preferably 2000. When the G' (20)/G"(85) is higher than 2000, the interlayer filling material for a touch panel may be too rigid and may have lower adhesiveness or handleability.

The interlayer filling material for a touch panel preferably has a loss elastic modulus G" (85) at 85°C of 1 × 10⁵ Pa or lower. When the G"(85) is 1 × 10⁵ Pa or lower, leaving air bubbles at a difference in level can be suppressed by application of a small stress especially during heating upon filling of an interlayer space (upon lamination). The upper limit of the G"(85) is more preferably 8 × 10⁴ Pa, still more preferably 7 × 10⁴ Pa.

The interlayer filling material for a touch panel preferably has a loss elastic modulus G" (20) at 20°C of 2 × 10⁵ Pa or higher. When the G" (20) is 2 × 10⁵ Pa or higher, the impact upon breakage of the personal digital assistant can be released enough to sufficiently suppress scattering of fragments. The lower limit of the G" (20) is more preferably 1 × 10⁶ Pa, still more preferably 3 × 10⁶ Pa, furthermore preferably 7 × 10⁶ Pa, particularly preferably 1 × 10⁷ Pa.

When the interlayer filling material for a touch panel has a temperature Tg at which tan δ reaches the maximum, within a range of -20°C to 100°C, of 5°C to 85°C, sufficient suppression of scattering of fragments upon breakage of the personal digital assistant and suppression of leaving air bubbles at a difference in level upon filling of an interlayer (upon lamination) can be compatibly achieved. The lower limit of the Tg is preferably 10°C, more preferably 15°C, still more preferably 20°C, particularly preferably 25°C, and the upper limit thereof is preferably 75°C, more preferably 65°C, still more preferably 55°C, particularly preferably 45°C.

The interlayer filling material for a touch panel preferably has a loss tangent tan δ(85) at 85°C of 2.5 or lower. The tan δ(85) of 2.5 or lower enables suppression of generation of air bubbles due to peeling of the interlayer filling material for a touch panel from a difference in level. Such peeling is caused by a residual stress of the difference in level after filling of an interlayer space (after lamination). The upper limit of the tan δ(85) is more preferably 1.5, still more preferably 1.0, furthermore preferably 0.5, particularly preferably 0.35.

The storage elastic modulus G' (20) at 20°C, the storage elastic modulus G' (85) at 85°C, the loss elastic modulus G" (20) at 20°C, the loss elastic modulus G"(85) at 85°C, the temperature Tg at which tan δ reaches the maximum within a range of -20°C to 100°C, and the tan δ(85) are values measured with a dynamic viscoelasticity measuring device such as ARES-G2 (TA INSTRUMENTS) or DVA-200 (IT Measurement Co., Ltd.) under the conditions of a temperature decreasing rate of 3°C/min from 100°C to -20°C, a frequency of 1 Hz, and a strain of 1%.

As a method of adjusting the storage elastic modulus G' (20) at 20°C, the storage elastic modulus G' (85) at 85°C, the loss elastic modulus G"(20) at 20°C, the loss elastic modulus G" (85) at 85°C, the Tg, and the tan δ(85) each within the above range, preferred is a method of adjusting the acetalization degree, the amount of hydroxy groups, the amount of acetyl groups, the average polymerization degree, the molecular weight of the polyvinyl alcohol with use of a plasticized polyvinyl acetal as described above or a method of adjusting the plasticizer content and the like.

For example, the storage elastic modulus G'(20) at 20°C is lowered when the plasticizer content or the compatibility between the plasticizer and the polyvinyl acetal is increased, and is increased when the plasticizer content or the compatibility between the plasticizer and the polyvinyl acetal is lowered. Alternatively, the storage elastic modulus G' (20) at 20°C is increased when the molecular weight of the polyvinyl acetal is increased, and is lowered when the molecular weight is reduced. Alternatively, the storage elastic modulus G' (20) at 20°C is increased when the Tg is higher, and is significantly lowered when the Tg is lower than 20°C.

The storage elastic modulus G' (85) at 85°C is increased, for example, when the molecular weight of the polyvinyl acetal is larger, and is lowered, for example, when the plasticizer content is increased. Alternatively, the storage elastic modulus G' (85) at 85°C is lowered when the compatibility between the polyvinyl acetal and the plasticizer is increased. With the same plasticizer content, the storage elastic modulus G' (85) at 85°C is different according to the compatibility between the plasticizer and the polyvinyl acetal.

The G' (20)/G' (85) and the G' (20)/G"(85) are increased, for example, when the plasticizer content is lowered, when the compatibility between the plasticizer and the polyvinyl acetal is lowered, or when the molecular weight of the polyvinyl acetal is larger.

The loss elastic modulus G"(85) at 85°C is lowered, for example, when the plasticizer content or the compatibility between the plasticizer and the polyvinyl acetal is increased. Alternatively, the loss elastic modulus G"(85) at 85°C is lowered by lowering the maturing temperature during the production.

The loss elastic modulus G" (20) at 20°C is increased, for example, when the molecular weight of the polyvinyl acetal is larger, and is lowered, for example, when the plasticizer content or the compatibility between the plasticizer and the polyvinyl acetal is increased. With the same plasticizer content, the loss elastic modulus G"(20) at 20°C is different according to the compatibility between the plasticizer and the polyvinyl acetal.

The Tg is adjusted, for example, by adjusting the plasticizer content. The Tg becomes lower when the plasticizer content is increased, and the Tg becomes higher when the plasticizer content is lowered.

The Tg is also adjusted by, for example, adjusting the amount of acetyl groups or the amount of hydroxy groups of the polyvinyl acetal. When the amount of acetyl groups in the polyvinyl acetal is larger, the compatibility between the polyvinyl acetal and the plasticizer is increased, and the Tg becomes lower. In contrast, when the amount of acetyl groups in the polyvinyl acetal is smaller, the compatibility between the polyvinyl acetal and the plasticizer is lowered, and the Tg becomes higher. When the amount of hydroxy groups in the polyvinyl acetal is larger, the compatibility between the polyvinyl acetal and the plasticizer is lowered, and the Tg becomes higher. In contrast, when the amount of hydroxy groups in the polyvinyl acetal is smaller, the compatibility between the polyvinyl acetal and the plasticizer is increased, and the Tg becomes lower. With the same plasticizer content, the Tg may be different when the amount of acetyl groups or the amount of hydroxy groups in the polyvinyl acetal is different. With the same Tg, the plasticizer content may be different.

The tan δ(85) is increased, for example, when the plasticizer content or the compatibility between the plasticizer and the polyvinyl acetal is increased. The tan δ(85) is lowered when the molecular weight of the polyvinyl acetal is larger, and is increased when the molecular weight of the polyvinyl acetal is smaller.

The interlayer filling material for a touch panel may have any shape, and may be a sheet, a film, a liquid (dispersion, emulsion), or the like. Preferred is a sheet shape. The interlayer filling material for a touch panel can sufficiently follow a difference in level due to a decorative printing portion or wiring to remove air bubbles remaining at the boundary of the difference in level even when the interlayer filling material is a thin material.

In the case of a sheet shape, the thickness of the interlayer filling material for a touch panel is not particularly limited, and may be determined according to applications thereof. The lower limit of the thickness is preferably 5 um and the upper limit thereof is preferably 800 um. When the thickness is less than 5 um, air bubbles may tend to remain at a difference in level upon filling of an interlayer space (upon lamination). The lower limit of the thickness is more preferably 10 um and the upper limit thereof is more preferably 400 um. The lower limit is still more preferably 25 um and the upper limit is still more preferably 300 um. The lower limit is furthermore preferably 50 um and the upper limit is furthermore preferably 200 um. The lower limit is particularly preferably 75 um and the upper limit is particularly preferably 100 µm.

The interlayer filling material for a touch panel may be produced by any method. In the case of a sheet shape, for example, a composition containing a plasticized polyvinyl acetal and additives added if needed is formed into a sheet shape by a conventional sheet-forming method such as extrusion, application, casting, calendering, or pressing.

A use of the interlayer filling material for a touch panel is defined in claim 10 and is a use in at least one interlayer space selected from interlayer spaces between a surface protection panel and a touch panel, between a touch panel and a polarizing film, and between a plurality of transparent conductive films included in a touch panel in a personal digital assistant (e.g., smartphone, tablet) or a flat or flexible image display device (e.g., electronic paper, PDA, TV, gamine machine) equipped with an image display panel such as LCD, EL, or PDP.

The interlayer filling material for a touch panel placed between layers and pressure-bonded with heat at around 85°C can easily fill an interlayer space. For easier removal of air bubbles, preliminary pressure bonding with heat at 70°C and 1 atm is first performed for 30 minutes in a vacuum laminator and then autoclave (ACV) treatment in which heating and pressurization are concurrently conducted is performed at 85°C and 0.5 MPa or higher for 30 minutes.

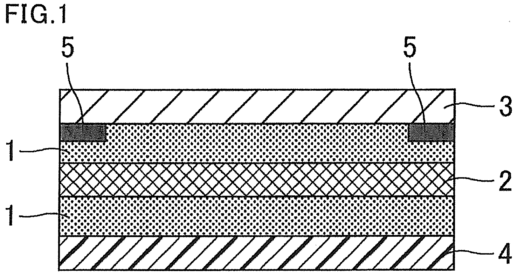

Fig. 1 is a cross section schematically illustrating an exemplary application of the interlayer filling material for a touch panel. In Fig. 1, an interlayer space between a surface protection panel 3 and a touch panel 2 and an interlayer space between the touch panel 2 and a polarizing film 4 are filled with the interlayer filling material for touch panel 1.

In Fig. 1, decorative printing portions 5 are formed on the periphery on the rear side of the surface protection panel 3 for the purpose of providing masking and the like. The interlayer filling materials for touch panel 1 sufficiently follow differences in level formed by the decorative printing portion 5 and a difference in level (not illustrated) formed by wiring on the touch panel 2 to remove air bubbles remaining at the boundaries of the differences in level upon filling of the interlayer spaces (upon lamination).

The present invention also encompasses the laminated body defined in claim 1 and including: a surface protection panel; a touch panel; a polarizing film; and the interlayer filling material for a touch panel filling at least one interlayer space selected from interlayer spaces between a plurality of transparent conductive films included in the touch panel.

The surface protection panel is not particularly limited, and those commonly used for personal digital assistants, flat or flexible image display devices, or the like may be used. Examples thereof include glass sheets, polycarbonate sheets, and acrylic sheets.

The touch panel is not particularly limited, and those commonly used for personal digital assistants, flat or flexible image display devices, or the like may be used. Examples thereof include touch panels including a plurality of layers such as ITO films. The structure of the touch panel is not particularly limited, and examples thereof include the out-cell type, the in-cell type, the on-cell type, the cover glass integrated type, and the cover sheet integrated type. The system of the touch panel is not particularly limited, and examples thereof include the resistive film type, the electrostatic capacitance type, the optical type, and the ultrasonic type.

The polarizing film is not particularly limited, and those commonly used for personal digital assistants, flat or flexible image display devices, or the like may be used.

### - Advantageous Effects of Invention

The present invention can provide a use of an interlayer filling material for a touch panel in and in particular for filling an interlayer space between a touch panel and another member in production of a personal digital assistant and the like, which is excellent in followability to a difference in level due to a decorative printing portion or wiring upon filling of the interlayer space (upon lamination) and deaeration properties of removing air bubbles trapped upon filling of the interlayer space (upon lamination) or air bubbles left around the difference in level, which is capable of suppressing scattering of fragments even when the personal digital assistant is broken. The present invention can also provide a laminated body.

### BRIEF DESCRIPTION OF DRAWINGS

Fig. 1 is a cross section schematically illustrating an exemplary application of the interlayer filling material for a touch panel used according to the present invention.

### DESCRIPTION OF EMBODIMENTS

The present invention is specifically described in the following with reference to, but not limited to, examples.

### (Preparation of polyvinyl butyral resin (1))

A reaction vessel equipped with a stirrer was charged with 2700 mL of ion-exchanged water and 300 g of polyvinyl alcohol having an average polymerization degree of 1800 and a saponification degree of 99.3 mol%. The polyvinyl alcohol was molten under heat with stirring to give a solution. The solution was blended with 35% by weight hydrochloric acid as a catalyst in an amount that gives a hydrochloric acid concentration of 0.2% by weight. After adjustment of the temperature of the solution to 15°C, 21 g of n-butyraldehyde (n-BA) was added thereto with stirring. Then, addition of 145 g of n-butyraldehyde (n-BA) to the solution resulted in deposition of polyvinyl butyral resin in the shape of white particles. After 15 minutes from the deposition, 35% by weight hydrochloric acid was added to the solution in an amount that gives a hydrochloric acid concentration of 1.8% by weight. The solution was then heated to 50°C and matured at 50°C for two hours. Next, after cooling and neutralization of the solution, the polyvinyl butyral resin was washed with water and dried to give polyvinyl butyral resin (1). In the polyvinyl butyral resin (1), the amount of hydroxy groups was 31.0 mol%, the amount of acetyl groups was 0.7 mol%, and the butyralization degree (Bu degree) was 68.3 mol%.

### (Preparation of polyvinyl butyral resins (2) to (7))

Polyvinyl butyral resins (2) to (7) were prepared in the same manner as in the case of the polyvinyl butyral resin (1) based on the formulations and conditions as shown in Table 1.

### (Examples 1 to 15)

### (1) Production of sheet-shaped interlayer filling material

Using the obtained polyvinyl butyral resins (1) to (7), the following film formation was performed based on "Formation of plasticized polyvinyl acetal" as shown in Table 2.

An amount of 100 parts by weight of the each obtained polyvinyl butyral resin (having a butyralization degree (Bu degree), the amount of hydroxy groups, and the amount of acetyl groups as shown in Table 1) was blended with triethylene glycol-di-2-ethylhexanoate (3GO) as a plasticizer in an amount as shown in Table 2. The mixture was sufficiently kneaded to give a kneaded mass. The obtained kneaded mass was formed into a sheet shape through press molding by a press molding machine. Sheet-shaped interlayer filling materials each having a thickness as shown in Table 2 were thus prepared.

### (2) Evaluation of viscoelasticity of sheet-shaped interlayer filling material

An amount of 1 g of a peeled sheet-shaped interlayer filling material was placed in a molding frame (2 cm in length × 2 cm in width × 0.76 mm in thickness) that is positioned between two polyethylene terephthalate (PET) films. The interlayer filling material was pre-heated at a temperature of 150°C and a pressure of 0 kg/cm² for 10 minutes and then press-molded at 80 kg/cm² for 15 minutes. The press-molded sheet-shaped interlayer filling material was placed in a hand press. The hand press was set to 20°C in advance. The interlayer filling material was pressed to cool at 10 MPa for 10 minutes. Next, one PET film was peeled from the molding frame positioned between two PET films, and placed in a constant temperature and humidity room (humidity: 30%(±3%), temperature: 23°C) for 24 hours.

Then, a parallel plate (diameter: 8 mm) was used as a jig. Measurement of viscoelasticity was performed using ARES-G2 produced by TA INSTRUMENTS under the conditions of a temperature decreasing rate of 3°C/min from 100°C to -20°C, a frequency of 1 Hz, and a strain of 1%. Based on the measurement results, a temperature at which tan δ reaches the maximum within a range of -20°C to 100°C was taken as the glass transition temperature Tg (°C). Based on the obtained measurement results, the storage elastic modulus G' (20), the storage elastic modulus G' (85), the loss elastic modulus G"(20), the loss elastic modulus G"(85), the loss tangent tan δ(85) at 85°C, G' (20)/G' (85), and G' (20)/G"(85) were obtained.

### (Comparative Example 1)

### (1) Preparation of acrylic copolymer

In a reaction vessel equipped with a stirrer, a reflux condenser, a thermometer, and a nitrogen gas inlet, 65.0 parts by weight of n-butyl acrylate, 26.0 parts by weight of methyl methacrylate, 4.0 parts by weight of ethyl acrylate, 1.0 part by weight of hydroxy ethyl acrylate, 4.0 parts by weight of acrylic acid, and 0.2 parts by weight of 2,2'-azobisisobutyronitrile as a polymerization initiator were dissolved in 100 parts by weight of ethyl acetate. After the inside of the reaction vessel was purged with nitrogen, the solution was polymerized at 80°C for eight hours to give an acrylic copolymer.

The obtained acrylic copolymer was diluted with tetrahydrofuran (THF) by a factor of 50 times. The resulting diluted solution was filtered through a filter (material: polytetrafluoroethylene, pore size: 0.2 µm) to prepare a measurement sample. The obtained measurement sample was placed in a gel permeation chromatograph (produced by Waters, 2690 Separations Model) and subjected to GPC measurement under the conditions of a sample flow rate of 1 ml/min and a column temperature of 40°C. The molecular weight of the acrylic copolymer in terms of polystyrene was thus determined. Based on the measurement result, the weight average molecular weight (Mw) was obtained.

The obtained acrylic copolymer had a weight average molecular weight of 650,000.

The column used was GPC LF-804 (Showa Denko K.K.) and the detector used was a differential refractometer.

### (2) Preparation of adhesive sheet

An amount of 100 parts by weight of the acrylic copolymer was diluted with ethyl acetate to give a pressure-sensitive adhesive solution with a resin solids content of 45%. An amount of 100 parts by weight of the pressure-sensitive adhesive solution was blended with 1 part by weight of an isocyanate crosslinking agent (produced by Nippon Polyurethane Industry Co., Ltd., Coronate L-45, solids content: 45%), stirred for 15 minutes, applied to a surface subjected to mold release treatment of a mold release PET film with a thickness of 50 um in such a manner that the thickness after drying becomes 150 µm, and dried at 80°C for 15 minutes. On the obtained pressure-sensitive adhesive layer, another mold release PET film was placed in such a manner that the surface subjected to mold release treatment was in contact with the pressure-sensitive adhesive layer. A laminated body was thus prepared. A resulting sheet was left to stand at 23°C for five days to give an adhesive sheet (thickness: 150 µm) having mold release PET films attached to the both surfaces thereof.

### (Comparative Examples 2 to 4)

Acrylic copolymers were prepared based on the formulations as shown in Table 3 in the same manner as in Comparative Example 1. Table 3 shows the formulations and the molecular weights. Adhesive sheets were produced in the same manner as in Comparative Example 1. Then, the measurement of the viscoelasticity was performed in the same manner as in Example 1. Table 3 shows the results.

### <Evaluation>

The sheet-shaped interlayer filling material (adhesive sheet) obtained in the examples and the comparative examples were evaluated for the following parameters. Tables 2 and 3 show the results.

### (1) Deaeration properties

To a sheet of white plate glass having a size of 76 mm × 52 mm and a thickness of 1.0 to 1.2 mm (produced by Matsunami Glass Ind., Ltd., S9112), one surface of the sheet-shaped interlayer filling material cut to the same size as the white plate glass was attached. The other surface of the sheet-shaped interlayer filling material was attached to an ITO-PET film (ITO-coated polyethylene terephthalate (PET) film) cut to the same size as the white plate glass. A structure of glass/a sheet-shaped interlayer filling material/an ITO-PET film was thus produced. During the production, air bubbles were sealed at the interface between the glass and the sheet-shaped interlayer filling material. Next, the structure was subjected to preliminary pressure bonding with heat at 70°C and 1 atm in a vacuum laminator, and then heated in an autoclave at 85°C and 0.5 MPa for 30 minutes. A laminated body in which the interlayer space between the glass and the ITO-PET film was filled with the sheet-shaped filling material was thus obtained.

The obtained laminated body was observed using a digital microscope (Keyence Corporation). The case where no air bubbles were left was rated Good (∘). The case where air bubbles were left was rated Poor (×).

### (2) Followability to difference in level

A single-sided adhesive tape in the shape of a square frame (outer frame: 76 mm × 52 mm, inner frame: 56 mm × 32 mm, thickness: 75 µm) was attached to a sheet of white plate glass (S9112 produced by Matsunami Glass Ind., Ltd., size: 76 mm × 52 mm, thickness: 1.0 to 1.2 mm) to form a difference in level.

The sheet-shaped interlayer filling material was cut to a size of 76 mm × 52 mm and attached to the surface of the white plate glass on the side where the square frame-shaped difference in level was formed. An ITO-coated polyethylene terephthalate film (ITO-PET, Sekisui Nano Coat Technology Co., Ltd.) was cut to a size of 76 mm × 52 mm and attached to the sheet-shaped interlayer filling material. Each material or film was attached in such a manner that air bubbles were excluded as far as possible. The obtained article was press-bonded in a vacuum laminator at 70°C and 1 atm for 30 minutes, treated in an autoclave at 85°C and 0.5 MPa for 30 minutes, and cooled to 30°C or lower, followed by pressure release. A sample for evaluation was thus produced.

The sample was observed with a digital microscope (Keyence Corporation). The case where air bubbles remaining at an interface of the difference in level was observed was rated Poor (×). The case where remaining air bubbles were not observed was rated Good (o).

### (3) Scattering prevention properties

One surface of the sheet-shaped filling material was attached to glass (size: 15.0 cm × 7.5 cm, thickness: 0.7 mm) . The other surface of the sheet-shaped filling material was attached to an ITO-coated polyethylene terephthalate film (ITO-PET). A structure of glass/a sheet-shaped filling material/an ITO-PET film was thus produced. The structure was press-bonded in a vacuum laminator at 70°C and 1 atm for 30 minutes, treated in an autoclave at 85°C and 0.5 MPa for 30 minutes, and cooled to 30°C or lower, followed by pressure release. A laminated body in which the interlayer space between the glass and the ITO-PET film was filled with the sheet-shaped filling material was thus obtained.

Onto the obtained laminated body, a 130-g iron ball was dropped from the height of 1 m in an environment of 23°C. The case where the laminated body was not broken was scored 1. The case where the laminated body was broken but glass fragments were not scattered and the sheet-shaped interlayer filling material did not have a crack or a cohesive failure was scored 2. The case where the laminated body was broken but glass fragments were not scattered and the sheet-shaped filling material partly had a crack was scored 3. The case where a small amount of glass fragments were scattered and the sheet-shaped interlayer filling material had a crack or a cohesive failure was scored 4. The case where glass fragments were scattered and the sheet-shaped interlayer material had a crack or a cohesive failure was scored 5.

The cases scored 1 to 3 were regarded to be acceptable. The cases scored 4 or 5 were regarded to be unacceptable. Here, glass powder produced from the glass itself at the drop position or fragments of broken glass itself were not included in the glass fragments to be evaluated. The glass fragments to be evaluated included glass fragments produced due to peeling of glass from the sheet-shaped interlayer filling material on the interface between the glass and the sheet-shaped filling material or glass fragments with the filling material attached thereto produced due to a cohesive failure of the sheet-shaped filling material.

**[Table 1]**

| | | Resin (1) | Resin (2) | Resin (3) | Resin (4) | Resin (5) | Resin (6) | Resin (7) |
|---|---|---|---|---|---|---|---|---|
| Formulation and condition | Ion-exchanged water (mL) | 2700 | 2700 | 2700 | 2700 | 2700 | 2700 | 2700 |
| | Average polymerization degree | 1800 | 1700 | 350 | 800 | 650 | 2400 | 3200 |
| | Saponification degree (mol%) | 99.3 | 99.2 | 96.0 | 95.0 | 99.0 | 87.0 | 88.0 |
| | Weight of polyvinyl alcohol (g) | 300 | 300 | 300 | 300 | 300 | 300 | 300 |
| | Concentration of catalyst (1) (35 wt% hydrochloric acid) after dilution with water (wt%) | 0.2 | 0.2 | - | - | - | - | 0.6 |
| | Concentration of catalyst (2) (60 wt% nitric acid) after dilution with water (wt%) | - | - | 0.6 | 0.6 | 0.5 | 0.6 | - |
| | Temperature (°C) | 15 | 15 | 15 | 15 | 15 | 15 | 15 |
| | n-BA first addition (g) | 21 | 15 | 11 | 13 | 15 | 13 | 142 |
| | n-BA second addition (g) | 145 | 130 | 170 | 205 | 150 | 180 | 186 |
| | Concentration of 35 wt% hydrochloric acid after dilution with water (wt%) | 1.8 | 1.8 | - | - | - | - | 3.9 |
| | Concentration of 60 wt% nitric acid after dilution with water (wt%) | - | - | 1.8 | 2.3 | 1.7 | 1.7 | - |
| | Heating (maturing) temperature (°C) | 50 | 60 | 57 | 50 | 56 | 52 | 45 |
| | Heating (maturing) time (hr) | 2 | 2 | 2 | 2 | 2.5 | 2 | 3 |
| Composition | Bu degree (mol%) | 68.3 | 64.7 | 74.0 | 73.0 | 65.0 | 64.0 | 64.0 |
| | Amount of acetyl groups (mol%) | 0.7 | 0.8 | 4.0 | 5.0 | 1.0 | 13.0 | 12.0 |
| | Amount of hydroxy groups (mol%) | 31.0 | 34.5 | 22.0 | 22.0 | 34.0 | 23.0 | 24.0 |

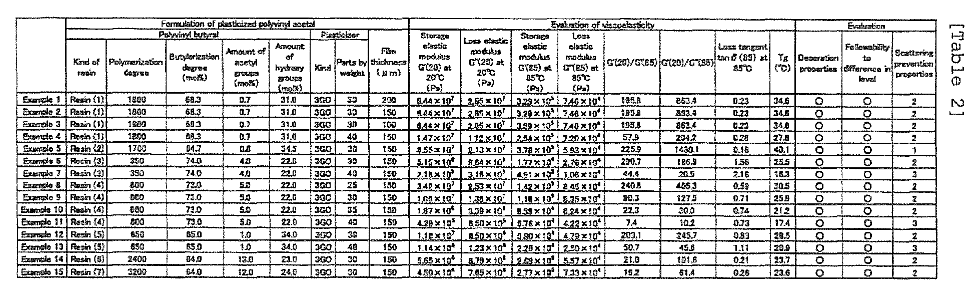

**[Table 3]**

| | | | Comparative Example 1 | Comparative Example 2 | Comparative Example 3 | Comparative Example 4 |
|---|---|---|---|---|---|---|
| Composition of acrylic copolymer | Monomer composition (parts by weight) | n-Butvlacrvlate | 65.0 | 25.0 | 43.0 | - |
| | | Methyl methacrvlate | 26.0 | | 14.5 | - |
| | | Ethyl acrvlate | 4.0 | | 39.0 | - |
| | | Hvdroxvethyl acrvlate | 1.0 | | 0.5 | 22.0 |
| | | 2-ethylhexyl acrvlate | - | 32.0 | - | 510 |
| | | Isobutyl acrvlate | - | 27.0 | - | 22.0 |
| | | 4-hydroxybutyl acrvlate | - | 15.0 | - | - |
| | | Acrvlic acid | 4.0 | 10 | 3.0 | 50 |
| | Weight average molecular weight (Mw/10,000) | | 65.0 | 700 | 60.0 | 75.0 |
| | Isocyanate crosslinking agent | Coronate L-45 produced by Nippon Polyurethane Industy Co., Ltd., Solids content: 45% | 1.0 | 10 | 1.0 | 1.0 |
| Viscoelasticity | Film thickness (µm) | | 150 | 150 | 150 | 150 |
| | Storage elastic modulus G'(20) at 20°C (Pa) | | 1.59 × 10⁵ | 616 × 10³ | 6.65 × 10⁴ | 9.35 × 10³ |
| | Loss elastic modulus G"(20) at 20°C (Pa) | | 1.18 × 10⁵ | 5.12 × 10³ | 8.21 × 10⁴ | 7.19 × 10³ |
| | Storage elastic modulus G'(85) at 85°C (Pa) | | 5.42 × 10⁴ | 5.04 × 10³ | 9.44 × 10³ | 6.11 × 10³ |
| | Loss elastic modulus G"(85) at 85°C (Pa) | | 1.41 × 10⁴ | 1.10 × 10³ | 6.12 × 10³ | 7.76 × 10² |
| | G'(20)/G'(85) | | 2.9 | 1.2 | 7.0 | 1.5 |
| | G'(20)/G"(85) | | 11.3 | 5.6 | 10.9 | 12.1 |
| | Loss tangent tan δ (85) at 85°C | | 0.26 | 0.22 | 0.65 | 0.13 |
| | Te (°C) | | 4.9 | -3.3 | 1.9 | -4.0 |
| Evaluation | Deaeration properties | | × | × | × | × |
| | Followability to level in difference | | × | × | × | × |
| | Scattering prevention properties | | 5 | 5 | 5 | 5 |

### INDUSTRIAL APPLICABILITY

The present invention can provide a use of an interlayer filling material for a touch panel in and in particular for filling an interlayer space between a touch panel and another member in production of a personal digital assistant and the like, which is excellent in followability to a difference in level due to a decorative printing portion or wiring upon filling of an interlayer space (upon lamination) and deaeration properties of removing air bubbles trapped upon filling of an interlayer (upon lamination) or air bubbles left around the difference in level, which is capable of suppressing scattering of fragments even when the personal digital assistant is broken. The present invention can also provide a laminated body produced.

### REFERENCE SIGNS LIST

1: Interlayer filling material for touch panel
2: Touch panel
3: Surface protection film
4: Polarizing film
5: Decorative printing portion

## Claims

1. A laminated body comprising:
a surface protection panel;
a touch panel including a plurality of transparent conductive films;
a polarizing film; and
an interlayer filling material for a touch panel filling at least one interlayer space selected from interlayer spaces between the plurality of transparent conductive films included in the touch panel,
the interlayer filling material containing a plasticized polyvinyl acetal,
the interlayer filling material having
a storage elastic modulus G'(20) at 20°C of 1 × 10⁷ Pa or higher,
a storage elastic modulus G'(85) at 85°C of 1 × 10⁶ Pa or lower, and
a temperature Tg at which tan δ reaches the maximum, within a range of -20°C to 100°C, of 5°C to 85°C,
wherein the storage elastic modulus G'(20) at 20°C, the storage elastic modulus G'(85) at 85°C and the temperature Tg at which tan δ reaches the maximum within a range of -20°C to 100°C are values measured with a dynamic viscoelasticity measuring device under the conditions of a temperature decreasing rate of 3°C/min from 100°C to -20°C, a frequency of 1 Hz, and a strain of 1%.

2. The laminated body according to claim 1,
wherein the plasticized polyvinyl acetal contains a polyvinyl acetal and a plasticizer and the interlayer filling material has a plasticized polyvinyl acetal content of 50% by weight or higher.

3. The laminated body according to claim 2,
wherein the polyvinyl acetal is polyvinyl butyral.

4. The laminated body according to claim 1, 2, or 3,
wherein a ratio G'(20)/G'(85) obtained by dividing a storage elastic modulus G'(20) at 20°C by a storage elastic modulus G'(85) at 85°C is 10 or higher.

5. The laminated body according to claim 1, 2, 3, or 4,
wherein a ratio G'(20)/G"(85) obtained by dividing a storage elastic modulus G'(20) at 20°C by a loss elastic modulus G"(85) at 85°C is 15 or higher,
wherein the loss elastic modulus G"(85) at 85°C is a value measured with a dynamic viscoelasticity measuring device under the conditions of a temperature decreasing rate of 3°C/min from 100°C to -20°C, a frequency of 1 Hz, and a strain of 1 %.

6. The laminated body according to claim 1, 2, 3, 4, or 5,
wherein a loss tangent tan δ (85) at 85°C is 2.5 or lower,
wherein the loss tangent tan δ (85) at 85°C is a value measured with a dynamic viscoelasticity measuring device under the conditions of a temperature decreasing rate of 3°C/min from 100°C to -20°C, a frequency of 1 Hz, and a strain of 1%.

7. The laminated body according to claim 1, 2, 3, 4, 5, or 6,
wherein a loss elastic modulus G"(85) at 85°C is 1 × 10⁵ Pa or lower.

8. The laminated body according to claim 1, 2, 3, 4, 5, 6, or 7,
wherein a loss elastic modulus G"(20) at 20°C is 2 × 10⁵ Pa or higher,
wherein the loss elastic modulus G"(20) at 20°C is a value measured with a dynamic viscoelasticity measuring device under the conditions of a temperature decreasing rate of 3°C/min from 100°C to -20°C, a frequency of 1 Hz, and a strain of 1 %.

9. The laminated body according to claim 1, 2, 3, 4, 5, 6, 7, or 8
wherein the elastic modulus G' (20) at 20°C is 3 × 10⁷ Pa or higher.

10. A use of an interlayer filling material in at least one interlayer space selected from interlayer spaces between a surface protection panel and a touch panel, between a touch panel and a polarizing film, and between a plurality of transparent conductive films included in a touch panel in a personal digital assistant or in a touch panel in a flat or flexible image display device,
the interlayer filling material containing a plasticized polyvinyl acetal,
the interlayer filling material having
a storage elastic modulus G'(20) at 20°C of 1 × 10⁷ Pa or higher,
a storage elastic modulus G'(85) at 85°C of 1 × 10⁶ Pa or lower, and
a temperature Tg at which tan δ reaches the maximum, within a range of -20°C to 100°C, of 5°C to 85°C,
wherein the storage elastic modulus G'(20) at 20°C, the storage elastic modulus G'(85) at 85°C and the temperature Tg at which tan δ reaches the maximum within a range of -20°C to 100°C are values measured with a dynamic viscoelasticity measuring device under the conditions of a temperature decreasing rate of 3°C/min from 100°C to -20°C, a frequency of 1 Hz, and a strain of 1%.

## Patentansprüche

1. Laminierter Körper, umfassend:
eine Oberflächenschutzplatte,
einen Berührungsbildschirm, der mehrere transparente leitfähige Filme beinhaltet, und
einen polarisierenden Film, und
ein Zwischenschicht-Füllmaterial für einen Berührungsbildschirm, das mindestens einen Zwischenschichtraum füllt, der ausgewählt ist aus Zwischenschichträumen zwischen den mehreren transparenten leitfähigen Filmen, die in dem Berührungsbildschirm beinhaltet sind,
wobei das Zwischenschicht-Füllmaterial ein plastifiziertes Polyvinylacetal enthält,
das Zwischenschicht-Füllmaterial aufweist:
einen Elastizitätsspeichermodul G'(20) bei 20 °C von 1 × 10⁷ Pa oder höher,
einen Elastizitätsspeichermodul G'(85) bei 85 °C von 1 × 10⁶ Pa oder niedriger, und
eine Temperatur Tg, bei der tan δ innerhalb eines Bereichs von -20 °C bis 100 °C das Maximum erreicht, von 5 °C bis 85 °C,
wobei der Elastizitätsspeichermodul G'(20) bei 20 °C, der Elastizitätsspeichermodul G'(85) bei 85 °C und die Temperatur Tg, bei der tan δ innerhalb eines Bereichs von -20 C° bis 100 C° das Maximum erreicht, Werte sind, die mit einer dynamischen Viskoelastizitätsmessvorrichtung unter den Bedingungen einer Temperaturverminderungsrate von 3 °C/min von 100 °C bis -20 °C, einer Frequenz von 1 Hz und einer Dehnung von 1 % gemessen werden.

2. Laminierter Körper nach Anspruch 1,
wobei das plastifizierte Polyvinylacetal ein Polyvinylacetal und ein Plastifizierungsmittel enthält und das Zwischenschicht-Füllmaterial einen plastifizierten Polyvinylacetal-Gehalt von 50 Gew.-% oder höher aufweist.

3. Laminierter Körper nach Anspruch 2,
wobei das Polyvinylacetal Polyvinylbutyral ist.

4. Laminierter Körper nach Anspruch 1, 2 oder 3,
wobei ein Verhältnis G'(20)/G'(85), das durch Dividieren eines Elastizitätsspeichermoduls G'(20) bei 20 °C durch einen Elastizitätsspeichermodul G'(85) bei 85 °C erhalten wird, 10 oder höher beträgt.

5. Laminierter Körper nach Anspruch 1, 2, 3 oder 4,
wobei ein Verhältnis G'(20)/G"(85), das durch Dividieren eines Elastizitätsspeichermoduls G'(20) bei 20 °C durch einen Elastizitätsverlustmodul G"(85) bei 85 °C erhalten wird, 15 oder höher beträgt,
wobei der Elastizitätsverlustmodul G"(85) bei 85 °C ein Wert ist, der mit einer dynamischen Viskoelastizitätsmessvorrichtung unter den Bedingungen einer Temperaturverminderungsrate von 3 °C/min von 100 °C bis -20 °C, einer Frequenz von 1 Hz und einer Dehnung von 1 % gemessen wird.

6. Laminierter Körper nach Anspruch 1, 2, 3, 4 oder 5,
wobei ein Tangens des Verlustwinkels tan δ (85) bei 85 °C 2,5 oder niedriger ist,
wobei der Tangens des Verlustwinkels tan δ (85) bei 85 °C ein Wert ist, der mit einer dynamischen Viskoelastizitätsmessvorrichtung unter den Bedingungen einer Temperaturverminderungsrate von 3 °C/min von 100 °C bis -20 °C, einer Frequenz von 1 Hz und einer Dehnung von 1 % gemessen wird.

7. Laminierter Körper nach Anspruch 1, 2, 3, 4, 5 oder 6,
wobei der Elastizitätsverlustmodul G"(85) bei 85 °C 1 × 10⁵ Pa oder niedriger ist.

8. Laminierter Körper nach Anspruch 1, 2, 3, 4, 5, 6 oder 7,
wobei ein Elastizitätsverlustmodul G"(20) bei 20 °C 2 × 10⁵ oder höher ist,
wobei der Elastizitätsverlustmodul G"(20) bei 20 °C ein Wert ist, der mit einer dynamischen Viskoelastizitätsmessvorrichtung unter den Bedingungen einer Temperaturverminderungsrate von 3 °C/min von 100 °C bis -20 °C, einer Frequenz von 1 Hz und einer Dehnung von 1 % gemessen wird.

9. Laminierter Körper nach Anspruch 1, 2, 3, 4, 5, 6, 7 oder 8,
wobei der Elastizitätsmodul G'(20) bei 20 ° 3 × 10⁷ Pa oder höher ist.

10. Verwendung eines Zwischenschicht-Füllmaterials in mindestens einem Zwischenschichtraum, der ausgewählt ist aus Zwischenschichträumen zwischen einer Oberflächenschutzplatte und einem Berührungsbildschirm, zwischen einem Berührungsbildschirm und einem polarisierenden Film und zwischen mehreren transparenten leitfähigen Filmen, die in einem Berührungsbildschirm in einem Personal Digital Assistant oder in einem Berührungsbildschirm in einer flachen oder biegsamen Bildanzeigevorrichtung beinhaltet sind,
wobei das Zwischenschicht-Füllmaterial ein plastifiziertes Polyvinylacetal enthält,
das Zwischenschicht-Füllmaterial aufweist:
einen Elastizitätsspeichermodul G'(20) bei 20 °C von 1 × 10⁷ Pa oder höher,
einen Elastizitätsspeichermodul G'(85) bei 85 °C von 1 × 10⁶ Pa oder niedriger, und
eine Temperatur Tg, bei der tan δ innerhalb eines Bereichs von -20 °C bis 100 °C das Maximum erreicht, von 5 °C bis 85 °C,
wobei der Elastizitätsspeichermodul G'(20) bei 20 °C, der Elastizitätsspeichermodul G'(85) bei 85 °C und die Temperatur Tg, bei der tan δ innerhalb eines Bereichs von -20 C° bis 100 ° das Maximum erreicht, Werte sind, die mit einer dynamischen Viskoelastizitätsmessvorrichtung unter den Bedingungen einer Temperaturverminderungsrate von 3 °C/min von 100 °C bis -20 °C, einer Frequenz von 1 Hz und einer Dehnung von 1 % gemessen werden.

## Revendications

1. Corps stratifié comprenant :
un panneau de protection de surface ;
un panneau tactile incluant plusieurs films conducteurs transparents ;
un film polarisant ; et
un matériau de remplissage de couche intermédiaire pour un panneau tactile remplissant au moins un espace de couche intermédiaire choisi parmi des espaces de couche intermédiaire entre les plusieurs films conducteurs transparents inclus dans le panneau tactile,
le matériau de remplissage de couche intermédiaire contenant un polyvinyl acétal plastifié,
le matériau de remplissage de couche intermédiaire ayant
un module élastique de stockage G'(20) à 20°C de 1 × 10⁷ Pa ou supérieur,
un module élastique de stockage G'(85) à 85°C de 1 × 10⁶ Pa ou inférieur, et
une température Tg à laquelle tan δ atteint le maximum, dans un intervalle de -20°C à 100°C, de 5°C à 85°C,
dans lequel le module élastique de stockage G'(20) à 20°C, le module élastique de stockage G'(85) à 85°C et la température Tg à laquelle tan δ atteint le maximum dans un intervalle de -20°C à 100°C sont des valeurs mesurées avec un dispositif de mesure de viscoélasticité dynamique dans les conditions d'une vitesse de diminution de température de 3°C/min de 100°C à -20°C, une fréquence de 1 Hz, et une contrainte de 1 %.

2. Corps stratifié selon la revendication 1,
dans lequel le polyvinyl acétal plastifié contient un polyvinyl acétal et un plastifiant et le matériau de remplissage de couche intermédiaire présente une teneur en polyvinyl acétal plastifié de 50 % en masse ou supérieure.

3. Corps stratifié selon la revendication 2,
dans lequel le polyvinyl acétal est le polyvinyl butyral.

4. Corps stratifié selon la revendication 1, 2, ou 3,
dans lequel un rapport G'(20)/G'(85) obtenu en divisant un module élastique de stockage G'(20) à 20°C par un module élastique de stockage G'(85) à 85°C est de 10 ou supérieur.

5. Corps stratifié selon la revendication 1, 2, 3, ou 4,
dans lequel un rapport G'(20)/G"(85) obtenu en divisant un module élastique de stockage G'(20) à 20°C par un module élastique de perte G"(85) à 85°C est de 15 ou supérieur,
dans lequel le module élastique de perte G"(85) à 85°C est une valeur mesurée avec un dispositif de mesure de viscoélasticité dynamique dans les conditions d'une vitesse de diminution de température de 3°C/min de 100°C à -20°C, une fréquence de 1 Hz, et une contrainte de 1 %.

6. Corps stratifié selon la revendication 1, 2, 3, 4, ou 5,
dans lequel la tangente de perte tan δ (85) à 85°C est de 2,5 ou inférieure,
dans lequel la tangente de perte tan δ (85) à 85°C est une valeur mesurée avec un dispositif de mesure de viscoélasticité dynamique dans les conditions d'une vitesse de diminution de température de 3°C/min de 100°C à -20°C, une fréquence de 1 Hz, et une contrainte de 1 %.

7. Corps stratifié selon la revendication 1, 2, 3, 4, 5, ou 6,
dans lequel un module élastique de perte G"(85) à 85°C est de 1 × 10⁵ Pa ou inférieur.

8. Corps stratifié selon la revendication 1, 2, 3, 4, 5, 6, ou 7,
dans lequel un module élastique de perte G"(20) à 20°C est de 2 × 10⁵ Pa ou supérieur,
dans lequel le module élastique de perte G"(20) à 20°C est une valeur mesurée avec un dispositif de mesure de viscoélasticité dynamique dans les conditions d'une vitesse de diminution de température de 3°C/min de 100°C à -20°C, une fréquence de 1 Hz, et une contrainte de 1 %.

9. Corps stratifié selon la revendication 1, 2, 3, 4, 5, 6, 7, ou 8,
dans lequel le module élastique G'(20) à 20°C est de 3 × 10⁷ Pa ou supérieur.

10. Utilisation d'un matériau de remplissage de couche intermédiaire dans au moins un espace de couche intermédiaire choisi parmi des espaces de couche intermédiaire entre un panneau de protection de surface et un panneau tactile, entre un panneau tactile et un film polarisant, et entre plusieurs films conducteurs transparents inclus dans un panneau tactile dans un assistant digital personnel ou dans un panneau tactile dans un dispositif d'affichage d'image plat ou flexible,
le matériau de remplissage de couche intermédiaire contenant un polyvinyl acétal plastifié,
le matériau de remplissage de couche intermédiaire ayant
un module élastique de stockage G'(20) à 20°C de 1 × 10⁷ Pa ou supérieur,
un module élastique de stockage G'(85) à 85°C de 1 × 10⁶ Pa ou inférieur, et
une température Tg à laquelle tan δ atteint le maximum, dans un intervalle de -20°C à 100°C, de 5°C à 85°C,
dans lequel le module élastique de stockage G'(20) à 20°C, le module élastique de stockage G'(85) à 85°C et la température Tg à laquelle tan δ atteint le maximum dans un intervalle de -20°C à 100°C sont des valeurs mesurées avec un dispositif de mesure de viscoélasticité dynamique dans les conditions d'une vitesse de diminution de température de 3°C/min de 100°C à -20°C, une fréquence de 1 Hz, et une contrainte de 1 %.
